(19) Europäisches Patentamt
European Patent Office
Office européen des brevets

(11) EP 1 888 316 B1

## (12) EUROPÄISCHE PATENTSCHRIFT

(45) Veröffentlichungstag und Bekanntmachung des Hinweises auf die Patenterteilung:
**29.02.2012 Patentblatt 2012/09**

(21) Anmeldenummer: **06754096.3**

(22) Anmeldetag: **02.06.2006**

(51) Int Cl.:
***B29C 45/78*** *(2006.01)*    ***B29C 45/77*** *(2006.01)*

(86) Internationale Anmeldenummer:
**PCT/EP2006/005304**

(87) Internationale Veröffentlichungsnummer:
**WO 2006/131278 (14.12.2006 Gazette 2006/50)**

(54) **VERFAHREN ZUM REGELN DES SPRITZGIESSPROZESSES EINER SPRITZGIESSMASCHINE**

METHOD FOR CONTROLLING THE INJECTION MOULDING PROCESS OF AN INJECTION MOULDING MACHINE

PROCEDE DE REGULATION DU PROCESSUS DE MOULAGE PAR INJECTION D'UNE MACHINE DE MOULAGE PAR INJECTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.06.2005 DE 102005027121**
**24.06.2005 DE 102005029705**

(43) Veröffentlichungstag der Anmeldung:
**20.02.2008 Patentblatt 2008/08**

(73) Patentinhaber: **Priamus System Technologies AG**
**8200 Schaffhausen (CH)**

(72) Erfinder: **BADER, Christopherus**
**CH-8413 Neftenbach (CH)**

(74) Vertreter: **Weiss, Peter**
**Dr. Weiss & Arat**
**Zeppelinstrasse 4**
**78234 Engen (DE)**

(56) Entgegenhaltungen:
EP-A- 0 704 293       WO-A-02/081176
DE-A1- 19 803 352    US-A- 5 411 686
US-A- 6 090 318

• **PATENT ABSTRACTS OF JAPAN Bd. 009, Nr. 090 (P-350), 19. April 1985 (1985-04-19) & JP 59 217119 A (NITSUSEI JIYUSHI KOGYO KK), 7. Dezember 1984 (1984-12-07)**

## Beschreibung

Die Erfindung betrifft ein Verfahren zum Regeln der Kühlzeit eines Spritzteils bei einem Spritz,giessprozess einer Spritzgiessmaschine mit einem Spritzgiesswerkzeug, welches zumindest eine Kavität für das herzustellende Spritzteil ausbildet, wobei eine Schmelze durch einen Anschnitt in die Kavität eingebracht wird.

## Stand der Technik

Der Spritzgiessprozess einer herkömmlichen Spritzgiessmaschine ist grundsätzlich in verschiedene zeitliche Phasen unterteilt und zwar

- Schliessen des Werkzeuges
- Einspritzen der Schmelze
- Nachdruckzeit
- Kühlzeit des Spritzteils
- Öffnen des Werkzeugs
- Entnahme des Spritzteil

Während das Öffnen, Schliessen und Entnehmen etwa 35%, das Einspritzen 5% und das Nachdrücken 10% des zeitlichen Verlaufs eines Zyklusses beanspruchen, nimmt die Kühlzeit immerhin 50% in Anspruch. Da heute der Wunsch nach immer kürzeren Zykluszeiten besteht, richtet sich das Augenmerk der Entwicktung auf die Verkürzung dieser Zeit.
Es gibt, verschiedene Ansätze, die Kühlzeit zu berechnen, wobei sich die mathematischen Gleichungen kaum voneinander unterscheiden. Beispielsweise ist folgende Rechnung bekannt:

$$t_{cool} = \frac{s^2}{\pi^2 * a_{eff}} * \ln \left( \frac{4}{\pi} * \frac{T_M - T_W}{T_E - T_W} \right)$$

$t_{cool}$ = Kühlzeit [s]
s = durchschnittliche Wanddicke des Formteils [mm]
$a_{eff}$ = Wärmeleitfähigkeit
$T_M$ = Schmelztemperatur des Kunststoffs
$T_E$ = Entformungstemperatur des Kunststoffteits
$T_W$ = Werkzeugwandtemperatur

Diese oder ähnliche Formeln werden in der Regel dazu verwendet, um die Kühlzeit für ein Formteil zu berechnen bzw. vor der Produktion grob abzuschätzen Anhand dieser groben Abschätzung erfolgt dann die Steuerung des Spritzgiessprozesses.
In neuerer Zeit wird eine Kuhlzeitregelung angeboten, deren Sinn es ist, während der Produktion bei jedem Zyklus kürzest mögliche Kühlzeiten zu bestimmen, um dann automatisch den Zyklus in diesem Moment abzubrechen und das Werkzeug zum Entformen des Formteils zur öffnen. Bei dieser Kühlzeitregelung werden die Wanddicke des Formteils und die Wärmeleitfähigkeit des Kunststoffes eingegeben, ebenso die Schmelzetemperatur und die Entformungstemperatur, nachdem diese einmalig ermittelt wurden. Ausschlaggebender Punkt ist dabei der Maximalwert der Werkzeugwandtemperatur, der in jedem Zyklos ermittelt wird. Gleichzeitig wird ermittelt, wann der Werkzeuginnendruck wieder auf Atmosphärendruck (1 bar) abfällt. Diese Werte werden mit der theoretischen Berechnung verglichen und denn als optimierter Wert in Form eines digitalen Signals zum Werkzeugöffnen an die Maschinensteuerung ausgegeben. In der Praxis ist allerdings aufgefallen, dass durch dieses Verfahren kaum eine zeitliche Verkürzung erreicht werden konnte. Allein die Wahl verschiedener Temperatursensoren bewirkt eine grössere Streuung bzw. einen grösseren Messfehler.
In der EP-A-0 704 293 wird ein Verfahren zur Temperierung von Spritzgiessmaschineneinheiten und Formwerkzeugen für die Kunststoffverarbeitung beschrieben. Dieses Dokument offenbart den Oberbegriff des Anspruchs 1.
Die US-A-5 411 686 bezieht sich auf ein Verfahren zur Erzielung von sowohl einem konstanten Wert der Formtemperatur, als auch einem konstanten Wert der Schmelzetemperatur, als auch einen konstanten Wert der Temperatur beim Auswurf des erzeugten Gegenstandes. Die entsprechenden Temperatursensoren befinden sich mitten im Werkzeug.

**Aufgabe**

Aufgabe der vorliegenden Erfindung ist es, ein Verfahren der o.g. Art zu entwickeln, welches zu einer Verkürzung der Zykluszeiten führt.

**Lösung der Aufgabe**

Die Aufgabe wird durch ein Verfahren nach Anspruch 1 gelößt.

Zur Lösung der Aufgabe führt, dass der zeitliche Verlauf einer Werkzeugwandtemperatur in der Kavität ermittelt und anhand des Verlaufes die Kühlzeit geregelt wird, wobei als Startwert für den Verlauf der Werkzeugwandtemperatur eine maximale Werkzeugwand-Temperatur oder der Umschaltpunkt auf Nachdruck oder der Maximalwert des Werkzeuginnendrucks verwendet wird und die zeitliche Regelung des Temperaturverlaufes indirekt in Form einer Integralberechnung unter der Temperaturkurve erfolgt, wobei das Integral unter der Temperaturkurve aufsummiert wird, bis ein vorbestimmter Grenzwert erreicht wird.

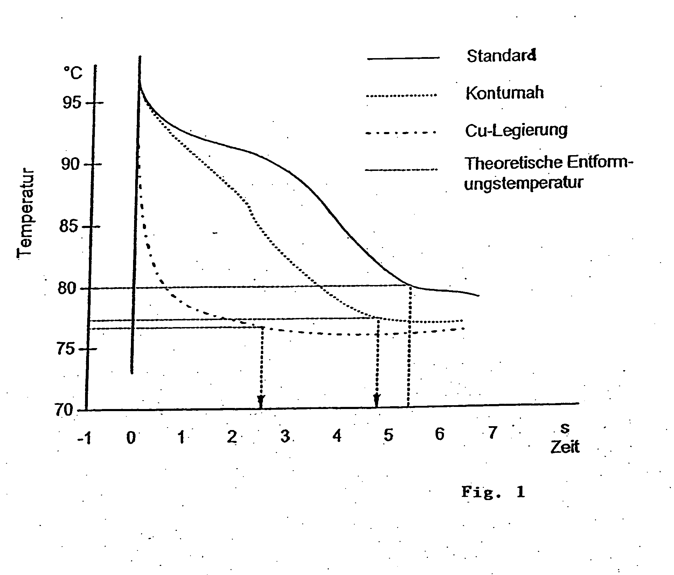

Es wurde festgestellt, dass die Ursache für eine schnelle Entformung nicht in erster Linie im Spritzteil selbst, sondern in der Wärmeabfuhr im Werkzeug liegt. Eine gute Kühlung z.B. nahe an der Oberfläche führt die Wärme prinzipiell schneller als eine schlechte Kühlung weit von der Werkzeugoberfläche entfernt. Ein Kern aus Kupferlegierung führt ebenfalls die Wärme besser ab, als ein Kern aus herkömmlichen Stahl. Eine Untersuchung des erfindungsgemässen Verfahrens hat festgestellt, dass durch die Art der gewählten Kühlung tatsächlich bis zu 50% der Kühlzeit eingespart werden konnte. Bemerkenswert hierbei ist die Tatsache, dass sich diese Einsparung eindeutig im Verlauf der Werkzeugtemperatur-Kurven wiederspiegelt (siehe Figur 1).

Deutlich erkennbar ist, dass bei Verwendung einer Kupferlegierung für den Werkzeugkern die strichpunktierte Kurve mit der kürzesten Kühlzeit aufgrund der guten Wärmeabfuhr sehr schnell zusammenfällt, so dass auch sehr schnell mit der Entformung begonnen werden kann. Bei einer punktiert dargestellten nur konturnahen Kühlung kann zwar eine Beschleunigung erreicht werden, jedoch ist diese nicht sehr hoch. Bei der bislang verwendeten schlechtesten Standardkühlung fällt die Kurve aufgrund der schlechten Wärmeabfuhr auch wesentlich langsamer ab. Hervorzuheben ist, dass bei allen drei Kurven die maximalen Werkzeugwandtemperaturen praktisch identisch sind, was wiederum erklärt, dass das im Stand der Technik beschriebene Verfahren nicht funktionieren kann.

Das heisst, eine Prozessüberwachung und eine Prozessregelung einer Spritzgiessmaschine zum Beispiel zur Ermittlung der kürzest notwendigen Kühlzeit muss über den Verlauf der Temperaturkurve erfolgen und nicht über deren Maximalwert. Dabei erfolgt die Ermittlung über den zeitlichen Verlauf der Werkzeugwandtemperatur bzw. indirekt über das Integral unter der Temperaturkurve.

Eine Änderung der Wärmeabfuhr während der Produktion bewirkt unterschiedliche Schwindungseigenschaften des Formteils und damit unterschiedliche Qualität. Eine Überwachung des Temperaturverlaufs zum Beispiel in Form der erwähnten Integralübervvachung ermöglicht das Aussortieren von Schlechtteilen anhand der variierenden Wärmeabfuhr.

Bevorzugt erfolgt die Regelung jedoch nicht nur in Abhängigkeit des Temperaturverlaufs, sondern auch in Abhängigkeit des Werkzeuginnendruckes, bevorzugt zu dem Zeitpunkt, wo der Werkzeuginnendruck den Atmosphärendruck erreicht. Ferner kann als Hilfsgrösse bzw. Startwert noch die maximale Werkzeugwand-Temperatur verwendet werden.

Zur Ermittlung einer optimalen Kühlzeit wird ein entsprechender Werkzeuginnendruck-Sensor bevorzugt in der Nähe des Anschnitts positioniert, da der Werkzeuginnendruck dort am längsten wirkt. Je weiter weg Richtung Fliesswegende der Sensor positioniert wird, desto kleiner und desto kürzer wird die Werkzeuginnendruckkurve.

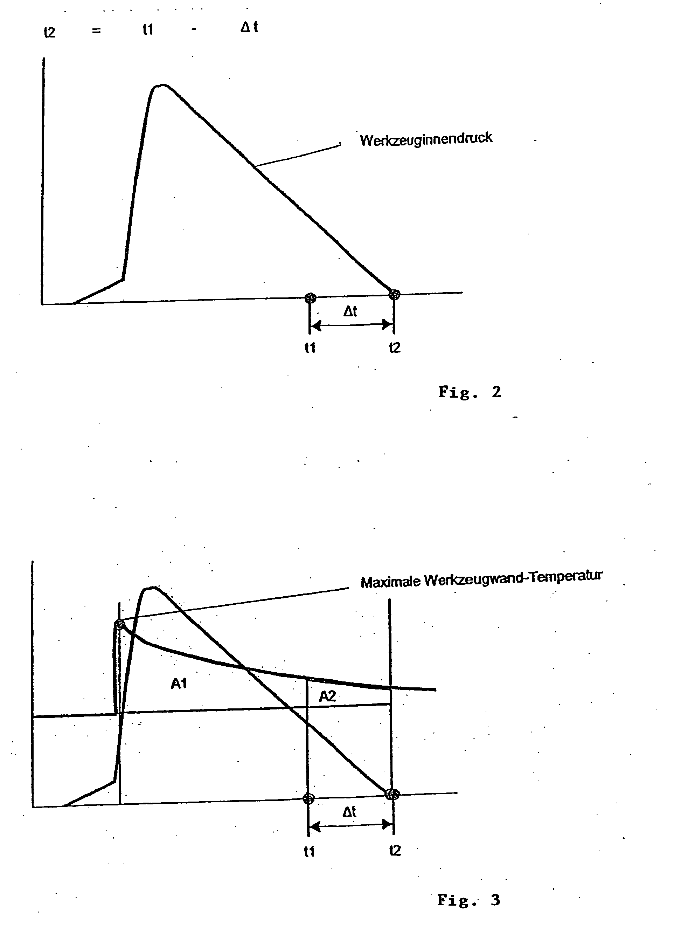

Ein Grenzwert $t1$, bei dem effektiv das Werkzeug nach optimaler Kühlzeit geöffnet werden kann, liegt vor dem eigentlichen Zeitpunkt $t2$, bei dem der Werkzeuginnendruck den Atmosphärendruck erreicht. D.h., die optimale Kühlzeit ist immer kürzer als die in der Nähe des Anschnitts gemessene Zeit bei Erreichen des Atmosphärendrucks $t2$. Das Ziel ist es also, die optimale Kühlzeit $t1$ in Echtzeit zu bestimmen: $t2 = t1 + \Delta t$. Dabei wird von der Erfindung aber auch umfasst, dass die Kühlzeit länger sein kann als die Zeit zum Erreichen des Atmosphärendruckes (siehe Figur 2).

Die massgebende Grösse zur Ermittlung der optimalen Kühlzeit $t1$ ist jedoch das Integral unter der Werkzeugwandtemperatur-Kurve (siehe Figur 3).

Die Regelung selbst sollte also so erfolgen, dass das Integral unter der Temperaturkurve in Echtzeit aufsummiert wird, bis ein bestimmter Grenzwert bei $t1$ erreicht wird.

Der zeitliche Startwert für die Integralbildung ist, wie oben erwähnt, der Maximalwert der Werkzeugwandtemperatur-Kurve oder der Umschaltpunkt auf Nachdruck oder der Maximalwert des Werkzeuginnendrucks. Der Umschaltpunkt kann dabei automatisch über das Temperatursignal oder über eine Schaltschwelle (z.B. 120 bar) des Werkzeuginnendrucks generiert werden.

Der Grenzwert $t1$, bei dem dann effektiv das Werkzeug bei optimaler Kühlzeit geöffnet wird, kann beispielsweise bestimmt werden, indem von dem Gesamtintegral aus dem vorherigen Zyklus (A1 + A2) eine bestimmte Fläche A2' substrahiert wird. Die Fläche A2' kann entweder empirisch ermittelt werden und/oder mit spezifischen Material- oder Geometriewerten des Formteils verrechnet werden (A2' x X).

Für den aktuellen Zyklus ergibt sich somit eine resultierende Fläche A1, aus der der Zeitpunkt zum Öffnen des Werkzeugs berechnet werden kann. Das Öffnen erfolgt dann in Echtzeit.

Bei einem Mehrkavitäten-Werkzeug muss, um die gleichen Teileeigenschaften in mehreren Kavitäten zu erreichen, jede Kavität gleich temperiert werden, wobei das Temperiermedium (Wasser, Öl, elektrisch usw.) keine Rolle spielt. Idealerweise sollte der Verlauf der verschiedenen Temperaturkurven in den verschiedenen Kavitäten identisch sein. Vor dem Anstieg der Temperaturkurven entspricht die gemessene Werkzeugwandtemperatur jedoch der Werkzeugtemperatur, da die Schmelze den Sensor noch nicht erreicht hat. Die Werkzeugtemperatur hält sich träge und kann über die eingestellten SollWerte mit unterschiedlich empfindlichen Temperiersystemen langfristig erreicht bzw. gehalten werden.

Im Fall einer Wasser-Temperierung kann die Solltemperatur in den einzelnen Kavitäten jedoch mit laminarer Strömung (wenig Durchfluss) als auch mit turbulenter Strömung (viel Durchfluss) erreicht werden. Um wirklich gleiche Temperaturbedingungen zu erwirken, müssen also tatsächlich zwei Regelungen realisiert werden, nämlich die Regelung der Solltemperaturen der Temperiergeräte und die Regelung der Wärmeabfuhr, deren Schwankung über den Verlauf der Temperaturkurven nach Erreichen der Schmelze an der Sensorposition sichtbar wird. Unterscheidet sich dabei der Verlauf der Werkzeugtemperaturen bei einzelnen Kavitäten, so kann eine automatische Anpassung (Regelung) durch Erhöhung oder Verminderung des Durchflusses erfolgen. Ziel beider Regelungen ist, identische Temperaturverhältnisse zu erreichen, wobei die Anzahl der Temperierkreisläufe (und somit die Anzahl der Temperatursignale) beliebig ist. Voraussetzung ist, dass pro Temperierkanal (oder pro elektrischer Heizzone) ein Temperatursensor eingesetzt wird.

**Patentansprüche**

1. Verfahren zum Regeln der Kühlzeit eines Spritzteils bei einem Spritzgiessprozess einer Spritzgiessmaschine mit einem Spritzgiesswerkzeug, welches zumindest eine Kavität für das herzustellende Spritzteil ausbildet, wobei eine Schmelze durch einen Anschnitt in die Kavität eingebracht wird,
**dadurch gekennzeichnet,**
**dass** der zeitliche Verlauf einer Werkzeugwandtemperatur in der Kavität ermittelt und anhand des Verlaufes die Kühlzeit geregelt wird, wobei als Startwert für den Verlauf der Werkzeugwandtemperatur eine maximale Werkzeugwand-Temperatur oder der Umschaltpunkt auf Nachdruck oder der Maximalwert des Werkzeuginnendrucks verwendet wird und die zeitliche Regelung des Temperaturverlaufes indirekt in Form einer Integralberechnung unter der Temperaturkurve erfolgt, wobei das Integral unter der Temperaturkurve aufsummiert wird, bis ein vorbestimmter Grenzwert erreicht wird.

2. Verfahren nach Anspruch 1, **dadurch gekennzeichnet, dass** ein automatisch über die Werkzeugwandtemperatur ermittelter Umschaltpunkt als Startwert für die Berechnung des Integrals verwendet wird.

3. Verfahren nach Anspruch 1 oder 2, **dadurch gekennzeichnet, dass** zusätzlich der Werkzeuginnendruck überwacht wird und der Maximaldruck oder der Umschaltdruck, als Startwert für die Berechnung des Integrals verwendet wird.

4. Verfahren nach Anspruch 3, **dadurch gekennzeichnet, dass** der Werkzeuginnendruck nahe dem Anschnitt ermittelt wird.

5. Verfahren nach Anspruch 3 oder 4, **dadurch gekennzeichnet, dass** der Werkzeuginnendruck bis zum Erreichen des Atmosphärendruckes überwacht und der Zeitpunkt bei Erreichen dieses Atmosphärendrucks als Regelparameter verwendet wird.

6. Verfahren nach Anspruch 5, **dadurch gekennzeichnet, dass** ein Öffnen des Werkzeuges nach einer optimalen Kühlzeit vor oder nach dem Erreichen des Atmosphärendruckes erfolgt.

7. Verfahren nach wenigstens einem der Ansprüche 1 bis 6, **dadurch gekennzeichnet, dass** die Werkzeugwandtemperatur in der Nähe des Endes des Fliesswegs ermittelt wird.

8. Verfahren nach wenigstens einem der Ansprüche 1 bis 7, **dadurch gekennzeichnet, dass** bei einem Mehrkavitäten-Werkzeug zusätzlich zur Regelung der Werkzeugtemperatur der Verlauf der Werkzeugwandtemperatur durch eine individuelle Regelung der Temperiermedien an den einzelnen Kavitäten vergleichmässigt wird.

9. Verfahren nach wenigstens einem der Ansprüche 1 bis 8, dadurch gekenntzeichnet, dass bei allen Arten von Spritzgiesswerkzeugen mit mehreren Temperierzonen bzw. -kreisläufen zusätzlich zur Regelung der Werkzeugtemperatur der Verlauf der Werkzeugwandtemperatur durch eine individuelle Regelung der Temperiermedien in jeder Zone bzw. in jedem Kreislauf vergleichmässigt wird.

**Claims**

1. Method for controlling the cooling time of an injection-moulded part in an injection-moulding process of an injection-moulding machine having an injection-moulding mould which forms at least one cavity for the injection-moulded part to be produced, with a melt being introduced into the cavity through a gate,
   **characterised**
   **in that** the time profile of a mould wall temperature in the cavity is determined and the cooling time is controlled by means of the profile, with a maximum mould wall temperature or the switching point to holding pressure or the maximum value of the mould internal pressure being used as a start value for the profile of the mould wall temperature, and the temperature profile being controlled over time indirectly in the form of an integral calculation under the temperature curve, with the integral under the temperature curve being summed until a predetermined limit value is reached.

2. Method according to Claim 1, **characterised in that** a switching point determined automatically via the mould wall temperature is used as a start value for the calculation of the integral.

3. Method according to Claim 1 or 2, **characterised in that** in addition the mould internal pressure is monitored and the maximum pressure or the switching pressure is used as a start value for the calculation of the integral.

4. Method according to Claim 3, **characterised in that** the mould internal pressure close to the gate is determined.

5. Method according to Claim 3 or 4, **characterised in that** the mould internal pressure is monitored until the atmospheric pressure is reached, and the instant on reaching this atmospheric pressure is used as a control parameter.

6. Method according to Claim 5, **characterised in that** opening the mould takes place after an optimum cooling time, before or after the atmospheric pressure is reached.

7. Method according to at least one of Claims 1 to 6, **characterised in that** the mould wall temperature in the vicinity of the end of the flow path is determined.

8. Method according to at least one of Claims 1 to 7, **characterised in that**, in the case of a multi-cavity mould, in addition to controlling the mould temperature, the profile of the mould wall temperature is made uniform by individually controlling the temperature-control media at the individual cavities.

9. Method according to at least one of Claims 1 to 8, **characterised in that**, in the case of all types of injection-moulding moulds with a plurality of temperature-control zones or temperature-control circuits, in addition to controlling the mould temperature, the profile of the mould wall temperature is made uniform by individually controlling the temperature-control media in each zone or in each circuit.

**Revendications**

1. Procédé de régulation du temps de refroidissement d'une pièce moulée par injection dans un processus de moulage d'une machine de moulage par injection avec un moule à injection qui constitue au moins une cavité pour la pièce moulée par injection à produire, un matériau en fusion étant introduit à travers une entrée dans la cavité,
   **caractérisé par le fait**
   **que** l'évolution dans le temps d'une température de paroi de moule dans la cavité est déterminée et que le temps de refroidissement est régulé à l'aide de l'évolution, comme valeur de départ pour l'évolution de la température de paroi de moule étant utilisée une température de paroi de moule maximale ou le point de commutation à la pression de finition ou la valeur maximale de la pression intérieure du moule et que la régulation dans le temps de l'évolution de température a lieu indirectement sous forme d'un calcul de l'intégrale sous la courbe de température, l'intégrale sous la courbe de température étant additionnée jusqu'à ce que soit atteinte une valeur limite

**2.** Procédé selon la revendication 1, **caractérisé par le fait qu'**un point de commutation déterminé automatiquement par l'intermédiaire de la température de paroi de moule est utilisé comme valeur de départ pour le calcul de l'intégrale.

**3.** Procédé selon la revendication 1 ou 2, **caractérisé par le fait qu'**en outre la pression intérieure du moule est surveillée et que la pression maximale ou la pression de commutation est utilisée comme valeur de départ pour le calcul de l'intégrale.

**4.** Procédé selon la revendication 3, **caractérisé par le fait que** la pression intérieure du moule est déterminée près de l'entrée.

**5.** Procédé selon la revendication 3 ou 4, **caractérisé par le fait que** la pression intérieure du moule est surveillée jusqu'à ce que soit atteinte la pression atmosphérique et que le moment de l'atteinte de la pression atmosphérique est utilisé comme paramètre de régulation.

**6.** Procédé selon la revendication 5, **caractérisé par le fait qu'**une ouverture du moule a lieu après un temps de refroidissement optimal ou avant ou après l'atteinte de la pression atmosphérique.

**7.** Procédé selon au moins l'une des revendications 1 à 6, **caractérisé par le fait que** la température de paroi de moule est déterminée à proximité de l'extrémité du trajet d'écoulement.

**8.** Procédé selon au moins l'une des revendications 1 à 7, **caractérisé par le fait que**, dans un moule à plusieurs cavités, outre la régulation de la température du moule, l'évolution de la température de paroi de moule est uniformisée par une régulation des moyens de thermostatisation aux différentes cavités.

**9.** Procédé selon au moins l'une des revendications 1 à 8, **caractérisé par le fait que**, dans tous les types de moules à injection à plusieurs zones ou circuits de thermostatisation, outre la régulation de la température du moule, l'évolution de la température de paroi de moule est uniformisés par une régulation des moyens de thermostatisation dans chaque zone ou dans chaque circuit.

Fig. 1

$$t2 \quad = \quad t1 \quad - \quad \Delta t$$

Werkzeuginnendruck

$\Delta t$

t1        t2

**Fig. 2**

Maximale Werkzeugwand-Temperatur

A1

A2

$\Delta t$

t1        t2

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0704293 A

- US 5411686 A